(19) **Europäisches Patentamt**

**European Patent Office**

**Office européen des brevets**

(11) **EP 1 138 952 B1**

(12) **FASCICULE DE BREVET EUROPEEN**

(45) Date de publication et mention
de la délivrance du brevet:
**02.11.2006 Bulletin 2006/44**

(51) Int Cl.:
*F04D 27/02* (2006.01)          *F01D 17/08* (2006.01)

(21) Numéro de dépôt: **01400247.1**

(22) Date de dépôt: **01.02.2001**

(54) **Procédé de détection précoce des instabilités aérodynamiques dans un compresseur de turbomachine**

Verfahren zur Früherkennung von aerodynamischen Unbeständigkeiten in einem Turbokompressor

Method for the early detection of aerodynamic instabilities in a turbomachine compressor

(84) Etats contractants désignés:
**DE FR GB**

(30) Priorité: **03.02.2000 FR 0001345**

(43) Date de publication de la demande:
**04.10.2001 Bulletin 2001/40**

(73) Titulaire: **SNECMA**
**75015 Paris (FR)**

(72) Inventeurs:
- **Escuret, Jean-François**
  **91190 Gif sur Yvette (FR)**
- **Leconte, Thierry**
  **77380 Combs la Ville (FR)**

- **Previtali, Romuald**
  **69004 Lyon (FR)**

(56) Documents cités:
EP-A- 0 597 440          WO-A-92/03661
WO-A-96/34207          WO-A-97/00381
US-A- 4 578 756          US-A- 5 275 528
US-A- 5 340 271          US-A- 5 594 665

- GARNIER V H ET AL: "ROTATING WAVES AS A STALL INCEPTION INDICATION IN AXIAL COMPRESSORS" PAPER OF THE AMERICAN SOCIETY OF MECHANICAL ENGINEERS, 11 juin 1990 (1990-06-11), XP002058443

**Description**

L'invention concerne un procédé de détection précoce des instabilités aérodynamiques dans un compresseur de turbomachine. Elle s'applique à tout type de turbomachine et notamment aux turboréacteurs d'avion.

Dans certaines conditions de fonctionnement, le compresseur d'une turbomachine peut passer dans un mode instable qui provoque des dommages allant d'une simple diminution de la longévité des éléments du moteur à une extinction complète du moteur pouvant conduire à un incident.

Des instabilités aérodynamiques, connues sous le nom de décollement tournant et de pompage, sont classiquement obtenues lorsque des variations de conditions de fonctionnement du moteur ont pour conséquence un changement brutal de l'un des paramètres du compresseur tels que le débit de masse de fluide, la température ou la pression de sortie.

Le pompage est caractérisé par des oscillations principalement axiales de l'écoulement au travers du compresseur.

Le décollement tournant est un phénomène qui produit une ou plusieurs zones localisées, appelées cellules de décollement, qui se propagent dans la direction circonférentielle à une fraction de la vitesse de rotation du compresseur dans les grilles d'aubes du compresseur.

Suivant la nature des cellules, on distingue le décollement partiel (en anglais : part span stall) d'un décollement étendu à l'ensemble de la hauteur de la veine (en anglais full span stall). Le décollement partiel peut être composé de plusieurs cellules en rotation constituant des perturbations locales qui n'affectent simultanément qu'un nombre d'aubes restreint et qui radialement, se limitent à une fraction de la veine du compresseur.

En revanche, le décollement étendu affecte une région radialement et angulairement plus importante des grilles d'aubes avec des variations d'amplitude plus fortes entre zones saines et zones décollées.

En général, la vitesse de propagation des cellules de décollement est plus élevée dans le cas d'un décollement partiel que celle correspondant à un décollement étendu.

La vitesse de propagation des cellules de décollement est de l'ordre de 70 à 80 % de la vitesse de rotation du rotor du compresseur pour le décollement partiel et d'environ 40 à 50 % pour le décollement étendu.

On distingue deux types de précurseurs des instabilités aérodynamiques appelés respectivement perturbations locales et perturbations modales, et il est nécessaire de disposer de méthodes de détection efficaces pour ces deux types de précurseurs.

Les perturbations locales sont généralement observées quelques dizaines ou quelques centaines de tours de rotation du compresseur avant que l'instabilité ne s'étende à l'ensemble du compresseur. Cependant elles sont difficiles à détecter car elles sont restreintes à un nombre limité d'aubes et à une fraction de la veine du compresseur. Elles sont de faible amplitude et de comportement fortement aléatoire : elles peuvent apparaître presque instantanément, se propager pendant une fraction de tour de rotation du compresseur puis disparaître sans provoquer d'instabilité globale irréversible du compresseur. En outre, ces perturbations locales sont caractéristiques d'une situation pour laquelle, à l'approche d'une zone d'instabilité, un étage particulier du compresseur atteint sa limite de charge aérodynamique avant les autres étages, ce qui nécessite que les capteurs soient préférentiellement placés à proximité de cet étage pour pouvoir détecter ces perturbations locales.

Les perturbations modales apparaissent également quelques dizaines ou quelques centaines de tours de rotation du compresseur avant l'instabilité. Elles sont directement associées à la réponse dynamique aux fluctuations de l'écoulement de fluide du compresseur complet quand le compresseur atteint la valeur maximale de sa courbe caractéristique de pression en fonction du débit. Ces perturbations modales sont ainsi caractéristiques d'une situation pour laquelle, les différents étages du compresseur atteignent ensemble leur limite de charge aérodynamique. Les perturbations modales affectent l'ensemble de la circonférence du compresseur à un instant donné et sont donc relativement plus faciles à détecter que les perturbations locales car elles se retrouvent sur l'ensemble des capteurs.

Pour résoudre les problèmes d'instabilité aérodynamique, il est connu de mettre en place des systèmes mécaniques préventifs permettant d'éviter l'apparition des instabilités. Ces systèmes mécaniques peuvent être par exemple, des aubages de prérotation variable, des stators variables, des vannes de décharge placées à l'intérieur du compresseur. Ces systèmes préventifs imposent cependant des contraintes de fonctionnement et des limitations de performances importantes.

Il existe également des systèmes curatifs permettant de détecter une situation de pompage et d'en sortir.

La technique de contrôle actif des instabilités utilisée sur la plupart des moteurs civils et militaires récents, consiste à détecter un cycle d'instabilités lorsque celui-ci se produit; cette détection déclenche ensuite une action correctrice des paramètres du compresseur ou du moteur afin de sortir de cette zone d'instabilités dans les meilleures conditions.

Cette technique présente cependant un risque d'endommager le moteur et de conduire à la perte de l'avion sur lequel il est monté.

Pour améliorer les performances des moteurs tout en assurant une sécurité suffisante, il est connu d'utiliser une autre technique de contrôle actif des instabilités qui permet au point de fonctionnement du compresseur de se situer le plus longtemps possible dans une zone proche de la zone de fonctionnement instable.

Cette technique de contrôle actif des instabilités consiste à détecter des précurseurs des instabilités aérodynamiques qui apparaissent avant que le compresseur n'entre dans un cycle d'instabilités. Ces précurseurs peuvent être par exemple des variations de pression, de vitesse ou de température qui apparaissent sur des signaux de capteurs plusieurs tours de rotation du compresseur avant qu'il n'entre dans un cycle d'instabilité. Si la détection est suffisamment précoce, une action correctrice du point de fonctionnement, ou de la géométrie, du compresseur peut être ensuite réalisée avant que les instabilités ne se produisent effectivement. Cette technique de contrôle actif des instabilités présente l'avantage de pouvoir fonctionner avec une marge au pompage fortement réduite car elle assure en temps réel la prévention de ces instabilités. Cependant, les méthodes actuelles de détection des précurseurs des instabilités sont difficiles à mettre en oeuvre et peu performantes car elles sont généralement liées à la mise au point d'un seuil de détection appliqué sur l'amplitude des signaux mesurés dans un environnement très bruité.

Le brevet WO96/34207 décrit une méthode permettant de détecter des précurseurs des instabilités aérodynamiques, et qui consiste à mesurer l'énergie du signal fréquentiel à la fréquence de rotation du compresseur, puis à comparer cette énergie à une valeur seuil empirique mise au point à partir de l'observation des signaux obtenus sur des moteurs sains lors d'accélérations.

Cependant seule l'énergie du signal à la fréquence de rotation du compresseur est analysée ce qui ne permet pas de détecter tous les précurseurs d'instabilités qui peuvent se produire à d'autres fréquences que la fréquence de rotation du compresseur.

Ceci est particulièrement gênant puisque la vitesse de propagation des perturbations locales est souvent inférieure à la vitesse de rotation du compresseur.

Le but de l'invention est de déterminer une nouvelle méthode de détection précoce des instabilités aérodynamiques dans un compresseur de turbomachine qui soit performante, efficace, simple à mettre en oeuvre et qui permette de détecter toute perturbation quelle que soit sa vitesse de propagation.

En particulier, l'invention concerne une méthode de détection des perturbations locales qui apparaissent très précocement sur des signaux délivrés par des capteurs instationnaires de pression, ou de vitesse d'écoulement, disposés à peu près uniformément sur la circonférence du compresseur entre les rangées d'aubes fixes et mobiles.

Pour cela, la nouvelle méthode consiste à détecter des événements caractéristiques des précurseurs des instabilités, et à appliquer des critères de décision permettant de statuer sur l'imminence d'une instabilité aérodynamique dans le compresseur.

Une décision peut être prise à partir d'un critère basé sur la cadence de détection des événements caractéristiques des précurseurs des instabilités.

Une décision peut aussi être prise à partir d'un critère basé sur la position spatio-temporelle des événements détectés sur l'ensemble des capteurs et sur l'évaluation d'un niveau de vraisemblance de la présence d'une propagation des perturbations locales détectées ; une décision peut également être prise à partir des deux critères précédents, appliqués successivement ou parallèlement.

Selon l'invention, le procédé de détection précoce des instabilités d'un écoulement aérodynamique dans un compresseur de turbomachine comportant un rotor tournant à une vitesse de rotation prédéterminée et des rangées d'aubes fixes et d'aubes mobiles est caractérisé en ce qu'il consiste :

- à faire l'acquisition des signaux délivrés par au moins un capteur, de position angulaire θ, disposé sur la circonférence du compresseur entre les rangées d'aubes fixes et mobiles, l'acquisition étant effectuée pendant une durée prédéterminée,
- à normaliser les signaux acquis,
- à détecter, à partir des signaux normalisés, des événements pour lesquels les signaux normalisés présentent une propriété consistant en une absence de passage par une valeur zéro pendant une durée Tz au moins supérieure à une durée de passage Ta de deux aubes successives devant le capteur,
- à analyser l'ensemble des événements détectés,
- à prendre une décision sur l'imminence d'une instabilité de l'écoulement aérodynamique dans le compresseur en fonction du résultat de l'analyse des événements.

Dans un premier mode de réalisation de l'invention, l'analyse des événements détectés consiste :

- à dénombrer les événements détectés par les capteurs pendant une durée prédéterminée supérieure à la durée de passage Ta de deux aubes successives devant le capteur pour obtenir une valeur de cadence de détection des événements,
- à comparer la valeur de cadence de détection obtenue à une valeur de seuil prédéterminée pour obtenir au moins une première indication sur l'imminence d'une instabilité.

Dans un second mode de réalisation de l'invention, l'analyse des événements détectés consiste :

- à relever la localisation spatio-temporelle des événements détectés à partir des signaux normalisés délivrés par au moins deux capteurs équirépartis sur la circonférence du compresseur,
- à rechercher, dans un espace de représentation temps/azimut (t,θ), des directions de propagation des événements correspondant à des vitesses de propagation comprises entre une valeur zéro et une valeur égale à la vitesse de rotation du rotor du compresseur,
- à affecter, pour chaque direction de propagation trouvée et à chaque événement détecté, un niveau de vraisemblance relatif à la présence d'une propagation spatiale de l'événement détecté dans la direction trouvée,
- à comparer chaque niveau de vraisemblance à une deuxième valeur de seuil prédéterminée pour obtenir au moins une indication sur l'imminence d'une instabilité.

Dans un troisième mode de réalisation de l'invention, l'analyse des événements détectés consiste :

- à dénombrer les événements détectés par les capteurs pendant une durée prédéterminée supérieure à la durée de passage Ta de deux aubes successives devant le capteur pour obtenir une valeur de cadence de détection des événements,
- à comparer la valeur de cadence de détection obtenue à une première valeur de seuil prédéterminée, pour obtenir au moins une première indication sur l'imminence d'une instabilité.
- à relever la localisation spatio-temporelle des événements détectés à partir des signaux normalisés délivrés par au moins deux capteurs équirépartis sur la circonférence du compresseur,
- à rechercher, dans un espace de représentation temps/azimut (t,θ), des directions de propagation des événements correspondant à des vitesses de propagation comprises entre une valeur zéro et une valeur égale à la vitesse de rotation du rotor du compresseur,
- à affecter, pour chaque direction de propagation trouvée et à chaque événement détecté, un niveau de vraisemblance relatif à la présence d'une propagation spatiale de l'événement détecté dans la direction trouvée,
- à comparer chaque niveau de vraisemblance à une deuxième valeur de seuil prédéterminée pour obtenir au moins une deuxième indication sur l'imminence d'une instabilité.

D'autres particularités ou avantages de l'invention apparaîtront clairement dans la suite de la description donnée à titre d'exemple non limitatif et faite en regard des figures annexées qui représentent :

- la figure 1, un exemple de compresseur de turbomachine équipé de capteurs de pression instationnaires, selon l'invention ;

- la figure 2, un exemple de signal de pression vu par un capteur placé en amont des bords d'attaque des aubes d'un rotor ;

- la figure 3, un exemple de signaux de pression normalisés délivrés par différents capteurs plusieurs tours de rotation du compresseur avant l'apparition d'un cycle de pompage ;

- la figure 4, (a) un exemple d'une grille d'aubes affectée par la propagation d'une cellule de décollement tournant, (b) un exemple de signal de pression vu par un capteur lors de l'apparition d'une cellule de décollement tournant ;

- les figures 5, 6, 7, trois organigrammes montrant les principales étapes de la méthode, selon différents modes de réalisation de l'invention ;

- les figures 8, 9, 10, trois exemples d'application de la méthode, selon l'invention.

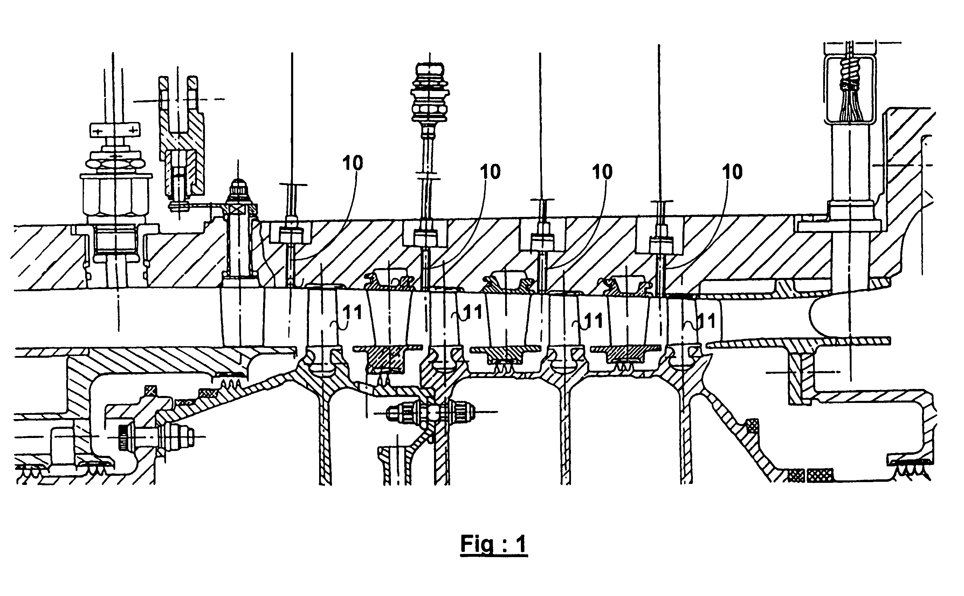

Comme représenté sur la figure 1, des capteurs 10 sont placés en amont des grilles d'aubes 11 du rotor du compresseur au plus proche des bords d'attaque des aubes et à peu près uniformément répartis sur la circonférence du compresseur afin d'optimiser la probabilité d'observer des cellules de décollement. Les capteurs utilisés sont par nature instationnaires, c'est à dire capables de relever des variations rapides de pression ou de vitesse. La suite de la description est limitée à des exemples de réalisation utilisant des capteurs de pression. Le comportement observé avec des capteurs de vitesse est similaire avec des variations de sens opposé.

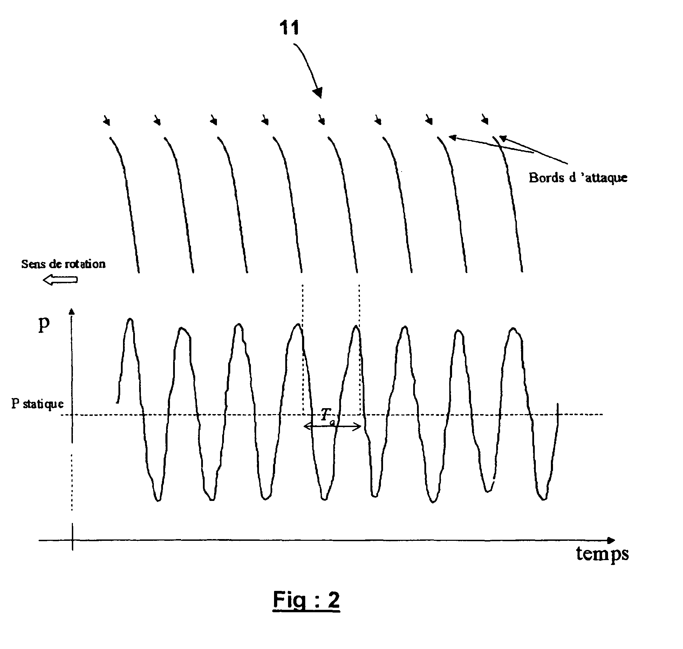

Sur la figure 2 sont représentés une grille d'aubes 11 et le signal de pression P vu par un capteur placé en amont des bords d'attaque des aubes du rotor, lors d'un fonctionnement sain, donc stable, du compresseur. Ce signal comporte une composante statique $P_{statique}$ qui, dans le cas d'un capteur de pression, correspond à l'augmentation de pression réalisée par chaque étage du compresseur. L'évolution autour de cette composante statique est plus complexe. Une analyse spectrale, non représentée, permet de montrer la présence de nombreuses fréquences, notamment les harmoniques de la vitesse de rotation, ainsi qu'une contribution principale à la fréquence de passage des aubes.

Ceci s'interprète de la manière suivante : si on considère une grille sur laquelle est fixée une seule aube, sa contribution locale sur le signal vu par le capteur de pression (qui est fixe) ne sera visible qu'à chaque tour. Si on note Tr la durée d'un tour, cette contribution apparaît toutes les Tr secondes, donc à la fréquence de rotation Fr égale à 1/Tr. Dans le cas plus général d'une grille sur laquelle sont fixées Na aubes, si le système est parfait, chaque aube apporte successivement la même contribution. Ainsi, le signal vu par le capteur de pression relève Na fois pendant un tour la même contribution, soit une contribution à la fréquence de passage des aubes Fa(1/Ta) égale à Na/Tr. Cette contribution peut être caractérisée simplement en considérant que le passage du bord d'attaque de l'aube provoque une augmentation locale de pression suivie d'une diminution.

Lorsqu'on normalise le signal de pression, on constate que le signal normalisé correspondant à un fonctionnement normal du compresseur passe régulièrement par la valeur zéro, c'est à dire que le signal de pression correspondant à la durée de passage entre deux aubes successives présente aux moins un changement de signe. La normalisation du signal est réalisée par un filtrage adaptatif du signal consistant à enlever la composante statique constituée par la valeur moyenne du signal, puis à diviser le résultat obtenu par la variance du signal.

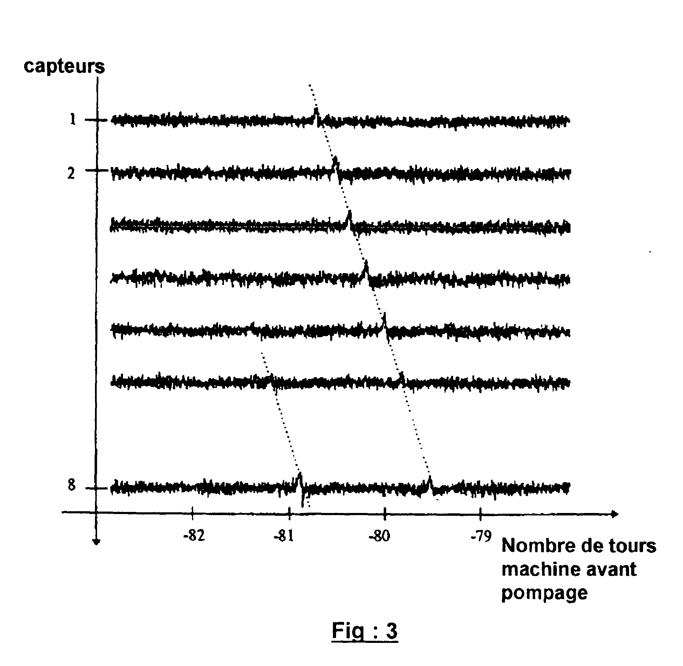

La figure 3 représente un exemple de signaux de pression normalisés délivrés par chaque capteur plusieurs tours de rotation du compresseur avant l'apparition d'un cycle de pompage. Sur cette figure, on observe des pics de pression qui apparaissent 80 tours de rotation avant l'apparition du pompage.

Ces pics qui sont visibles sur les signaux délivrés par tous les capteurs, sont des perturbations locales qui se propagent à une fraction de la vitesse de rotation du compresseur. Les perturbations locales qui précèdent l'entrée en pompage correspondent à un décollement partiel se propageant sur plusieurs aubes pendant une courte durée. Il s'agit donc de déterminer une méthode permettant de détecter systématiquement ces perturbations.

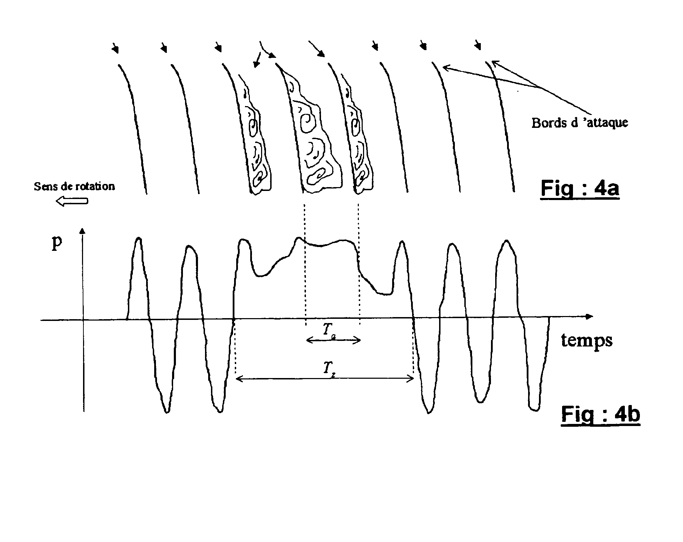

Sur la figure 4 sont représentés : (a) une grille d'aubes affectée par la propagation d'une cellule de décollement tournant, (b) le signal de pression P vu par un capteur lors de l'apparition d'une cellule de décollement tournant. Lors de l'apparition d'une cellule de décollement dans un canal inter-aube, les contributions des aubes du canal décollé au signal des capteurs sont fortement modifiées. En effet, la cellule de décollement se présente comme une obstruction locale et instantanée du canal inter-aube. La modification du signal de pression consiste en une absence de passage par la valeur zéro pendant une durée Tz supérieure à la durée de passage Ta de deux aubes successives devant un même capteur. Cette absence de passage par zéro constitue la signature d'une cellule de décollement sur le signal de pression normalisé et est utilisée comme un attribut des précurseurs des instabilités aérodynamiques dans le compresseur.

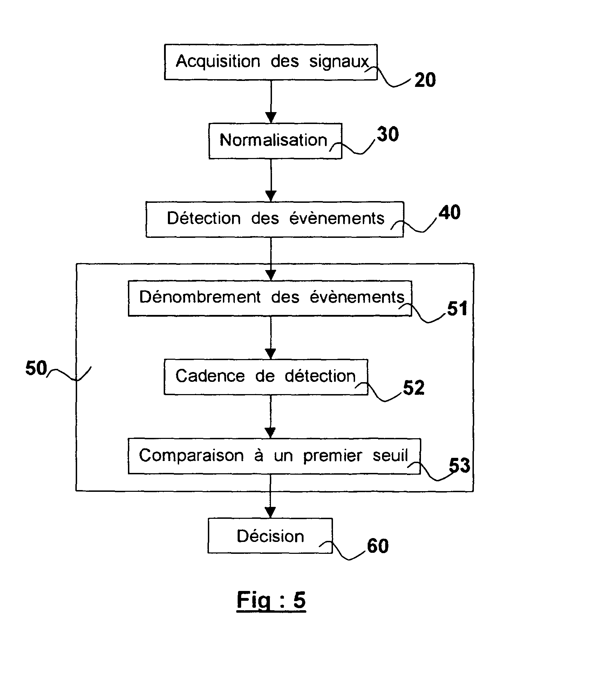

Comme représenté sur les figures 5 à 7 la méthode selon l'invention consiste donc pour chaque capteur, à relever, à partir du signal de pression acquis 20 et normalisé 30, tous les événements vérifiant cette propriété de non passage par zéro. Le résultat de la détection d'événements 40 par un capteur placé sur la circonférence du compresseur, à la position angulaire θ et à l'instant t, est représenté par la fonction E(t,θ), où E(t,θ) prend la valeur logique 1 lorsque la propriété de non passage par zéro est vérifiée et la valeur 0 dans le cas contraire.

Bien que la vitesse de propagation des pics corresponde à une basse fréquence par rapport à la fréquence correspondant à la vitesse de passage des aubes du compresseur, afin d'évaluer la propriété de non passage par zéro du signal, la fréquence d'échantillonnage du signal de pression doit être suffisamment élevée, c'est à dire supérieure à au moins deux fois et demi la fréquence de passage des aubes pour permettre une détection systématique de ces pics. L'invention consiste ensuite à analyser 50 l'ensemble des événements détectés afin de pouvoir statuer 60 sur l'imminence d'une instabilité aérodynamique.

Différents types d'analyse peuvent être réalisés. Par exemple, comme représenté sur la figure 5, l'analyse des événements peut consister à dénombrer 51 les événements détectés par les capteurs pendant une certaine durée prédéterminée supérieure à la durée de passage Ta de deux aubes successives devant le capteur et à déterminer la cadence de détection 52 des événements. La valeur de cadence de détection obtenue est alors comparée à une première valeur de seuil 53 prédéterminée pour obtenir au moins une première indication sur l'imminence d'une instabilité. En effet, plus le nombre d'apparitions de cellules de décollement est important, plus la probabilité d'aboutir à une instabilité aérodynamique est grande. Une décision 60 peut alors être prise sur la stabilité de l'écoulement aérodynamique. L'avantage de cette analyse est qu'elle permet d'obtenir une première estimation rapide sur la stabilité de l'écoulement à partir d'un seul signal de pression délivré par un seul capteur. Cependant, cette première estimation est plus fiable si le nombre de capteurs est plus important.

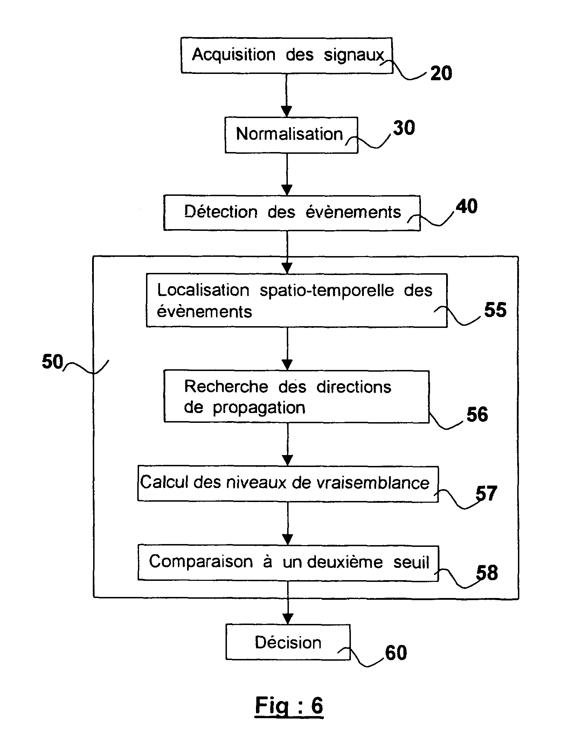

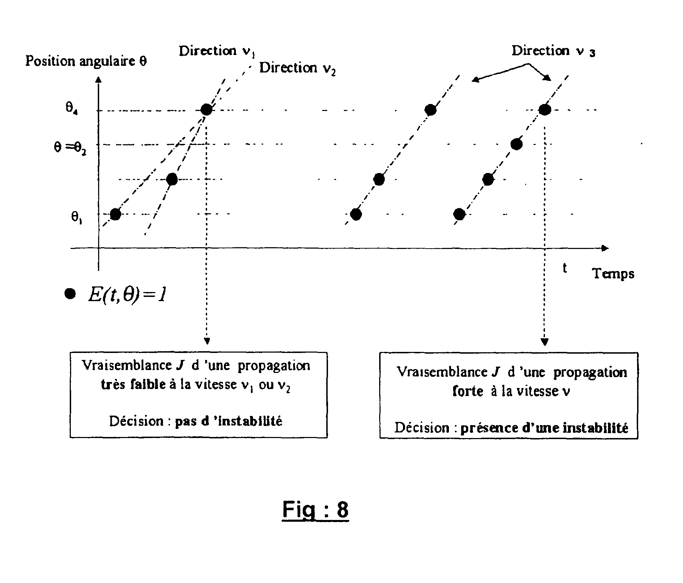

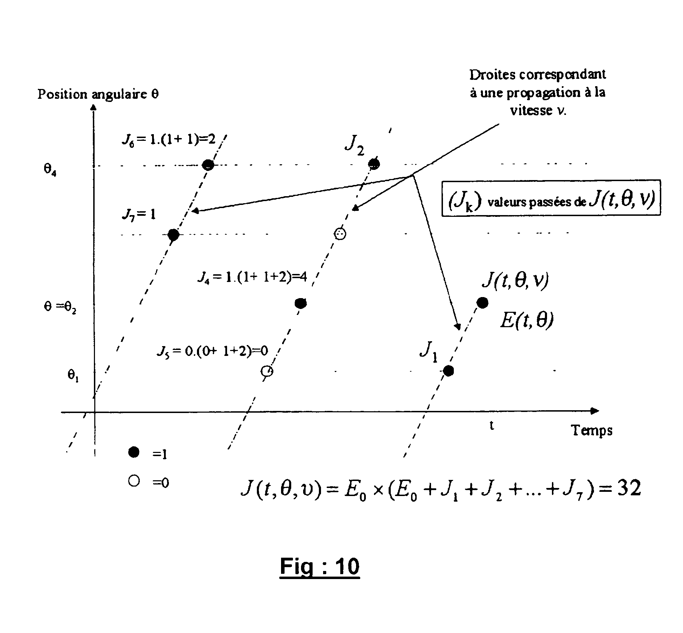

Un autre type d'analyse permettant d'obtenir une estimation plus fiable peut être réalisée lorsque plusieurs capteurs sont disposés de façon équirépartie sur la circonférence du compresseur. Les différentes étapes de ce type d'analyse sont indiquées sur la figure 6 et un exemple de réalisation avec quatre capteurs équirépartis sur la circonférence du compresseur est représenté sur la figure 8. Cette analyse consiste à relever la localisation spatio-temporelle 55 des événements détectés, puis une recherche des directions de propagation 56 des perturbations correspondant à chaque événement détecté est effectuée à partir des signaux délivrés par tous les capteurs, en réalisant un balayage des vitesses comprises entre 0 et la vitesse de rotation du rotor du compresseur et en recherchant, pour chaque valeur de vitesse examinée, les événements détectés qui sont alignés suivant la direction de propagation correspondant à cette vitesse. Sur l'exemple de la figure 8, 10 événements ont été détectés pour les positions angulaires θ1,θ2,θ3,θ4 des quatre capteurs et trois directions de propagation correspondant aux vitesses v1, v2, v3, ont été retenues.

Un niveau de vraisemblance J, 57, relatif à la présence d'une propagation spatiale de perturbations locales à une fraction de la vitesse de rotation du rotor du compresseur est alors affecté à chaque direction de propagation trouvée. Pour chaque événement localisé dans le temps et dans l'espace, le niveau de vraisemblance J est une fonction dépendante du temps t, de la position spatiale θ, et de la vitesse v de propagation.

Différents critères peuvent être utilisés pour la détermination du niveau de vraisemblance J0(t,θ,v) pour un événement détecté au temps t, à la position θ, à la vitesse v. Tous ces critères doivent cependant être une fonction du nombre d'événements détectés antérieurement à l'événement considéré dans la direction de propagation correspondant à la vitesse v.

Si le nombre d'événements détectés antérieurement à la vitesse v, est nul, c'est à dire si toutes les valeurs Ek antérieures (où k est un entier positif) sont égales à 0, le niveau de vraisemblance doit être nul. En effet, il n'y a aucune chance qu'il y ait une propagation de perturbations dans une direction correspondant à une vitesse v si aucun événement n'a été détecté dans cette direction. En revanche, si toutes les valeurs Ek antérieures sont égales à 1, le niveau de vraisemblance doit être maximal. Sur la figure 8, on constate que sur les 10 événements détectés, deux événements sont alignés suivant la direction de propagation v1 ainsi que suivant la direction de propagation v2, alors que 7 événements sont alignés suivant la direction de propagation v3. Par conséquent, le niveau de vraisemblance J d'une propagation aux vitesses v1 et v2 doit être faible et conduire à une décision d'absence d'instabilité alors que le niveau de vraisemblance d'une propagation à la vitesse v3 doit être fort et conduire à une décision de présence d'une instabilité.

Les valeurs antérieures étant a priori en nombre infini, il est nécessaire d'effectuer une approximation ne faisant intervenir qu'un nombre fini de valeurs antérieures.

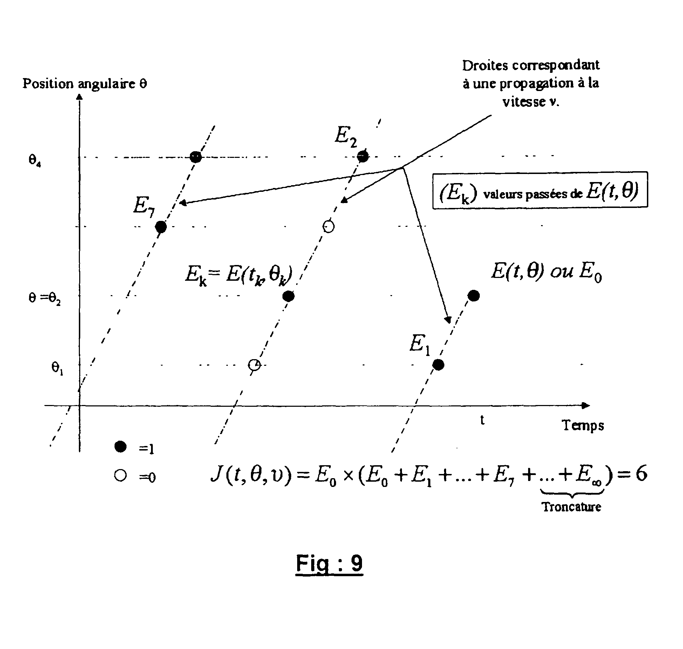

L'approximation peut être réalisée au moyen d'une troncature en ne considérant qu'un certain nombre prédéterminé m de valeurs antérieures, comme représenté par exemple sur la figure 9 où m=7. Dans ce cas, le niveau de vraisemblance J est une fonction des valeurs antérieures Ek considérées. Par exemple, le niveau de vraisemblance J peut être choisi égal à la valeur de l'événement considéré E0 pondérée par la somme des valeurs des événements Ek antérieurs en limitant l'analyse aux m derniers événements détectés :

$$J0(t,\theta,v) = E0(t,\theta,v)\left(\sum_{k=0}^{k=m-1} Ek\,(t,\theta,v)\right)$$

Le facteur E0(t,θ,v) permet d'attribuer une valeur zéro à J lorsqu'aucun événement n'est détecté en (t,θ). Dans l'exemple représenté sur la figure 9, J = 6.

Cette approximation présente l'avantage d'être facile et rapide à mettre en oeuvre mais n'intègre qu'un nombre limité m de valeurs antérieures et ne fait aucune distinction de continuité sur les événements détectés.

Un autre type d'approximation peut être réalisé en utilisant une méthode récursive intégrant une dépendance infinie vis à vis des valeurs Ek antérieures mais en ne considérant qu'un nombre fini m de valeurs de niveaux de vraisemblance comme représenté par exemple sur la figure 10. Dans cet exemple, le niveau de vraisemblance J(t,θ,v) est une fonction des valeurs antérieures Jk calculées pour des événements se propageant dans la direction de propagation correspondant à la vitesse v:

$$J0(t,\theta,v) = E0(t,\theta,v) \times \left(E0(t,\theta,v) + \sum_{k=1}^{k=m-1} Jk(t,\theta,v)\right)$$

Dans l'exemple représenté à la figure 10, en se limitant aux sept derniers événements détectés (m=7),

J7=1 ; J6=2 ; J5=0 ; J4=4 ; J3=0 ; J2=8 ; J1=16 ;
J0(t,θ,v)=32.

L'avantage de cette approximation est qu'elle permet de tenir compte de la contribution d'une infinité de valeurs antérieures des événements détectés mais elle est plus coûteuse que celle réalisée en référence à la figure 9 car elle impose de stocker les valeurs passées du niveau de vraisemblance calculé à chaque itération pour chaque vitesse de propagation. Par ailleurs, comme dans l'exemple de la figure 9 cette approximation ne permet pas d'effectuer une distinction sur la continuité des événements détectés.

Pour tenir compte de la continuité des événements détectés dans la détermination du niveau de vraisemblance, il est nécessaire de choisir des fonctions différentes d'une simple somme. Ces fonctions doivent être choisies de façon que la détection d'une propagation d'un événement dans une direction v par plusieurs capteurs successifs soit plus critique qu'une propagation discontinue détectée par le même nombre de capteurs.

Par exemple, on peut choisir une fonction consistant à pondérer la somme des valeurs antérieures Jk utilisée dans la méthode récursive, par un facteur d'oubli, noté λk, où λk est un nombre positif strictement inférieur à 1. Par exemple :

$$J0(t,\theta,v) = E0(t,\theta,v) \times \left( E0(t,\theta,v) + \sum_{k=1}^{k=m-1} \lambda k \; Jk(t,\theta,v) \right)$$

m étant le nombre d'événements auxquels l'analyse est limitée.

Cette pondération permet de donner moins d'importance aux propagations discontinues qu'aux propagations continues.

Quelle que soit la méthode choisie pour estimer le niveau de vraisemblance, le niveau de vraisemblance est ensuite comparé 58 à une deuxième valeur de seuil prédéterminée afin d'obtenir une deuxième estimation sur la stabilité aérodynamique du compresseur. La valeur de seuil est différente pour chacune des méthodes décrites ci-dessus. Par exemple la valeur de seuil peut être définie de manière qu'une propagation de perturbations locales détectée continûment sur plus d'une demi-circonférence du compresseur déclenche un signal de détection précoce du pompage.

La décision 60 en faveur de l'existence d'une propagation est prise si la valeur maximale de J à un instant donné est supérieure ou égale à la valeur de seuil choisie.

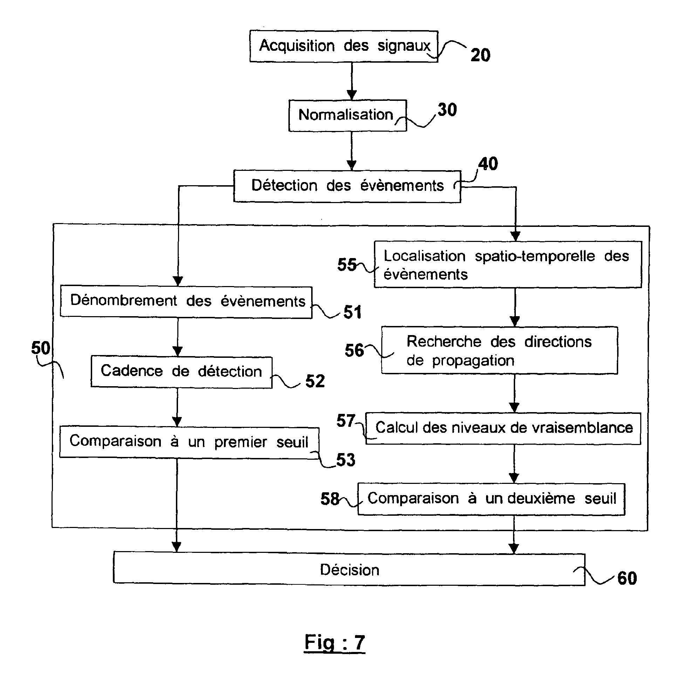

Comme représenté sur la figure 7, les deux types d'analyses décrits ci-dessus peuvent également être réalisés en parallèle pour obtenir deux indications sur la stabilité aérodynamique du compresseur avant de prendre une décision.

## Revendications

1. Procédé de détection précoce des instabilités d'un écoulement aérodynamique dans un compresseur de turbomachine comportant un rotor tournant à une vitesse de rotation prédéterminée et des rangées d'aubes fixes et d'aubes mobiles, **caractérisé en ce qu'**il consiste :

   - à faire l'acquisition (20) des signaux délivrés par au moins un capteur de position angulaire θ disposé sur la circonférence du compresseur entre les rangées d'aubes fixes et mobiles, l'acquisition étant effectuée pendant une durée prédéterminée,
   - à normaliser (30) les signaux acquis,
   - à détecter (40), à partir des signaux normalisés, des événements pour lesquels les signaux normalisés présentent une propriété consistant en une absence de passage par une valeur zéro pendant une durée Tz au moins supérieure à une durée de passage Ta de deux aubes mobiles successives devant le capteur,
   - à analyser (50) l'ensemble des événements détectés,
   - à prendre une décision (60) sur l'imminence d'une instabilité de l'écoulement aérodynamique dans le compresseur en fonction du résultat de l'analyse des événements.

2. Procédé de détection précoce des instabilités d'un écoulement aérodynamique selon la revendication 1, **caractérisé en ce que** le résultat de la détection d'événements à l'instant t, par un capteur de position θ, est représenté par une fonction E(t,θ) qui prend une valeur logique 1 ou 0 selon que la propriété d'absence de passage par zéro pendant la durée Tz est vérifiée ou non.

3. Procédé de détection précoce des instabilités d'un écoulement aérodynamique selon la revendication 1, **caractérisé**

**en ce que** l'analyse des événements consiste :

- à dénombrer (51) les événements détectés par les capteurs pendant une durée prédéterminée supérieure à la durée de passage Ta de deux aubes successives devant le capteur pour obtenir (52) une valeur de cadence de détection des événements,
- à comparer (53) la valeur de cadence de détection obtenue à une première valeur de seuil prédéterminée pour obtenir au moins une première indication sur l'imminence d'une instabilité.

4. Procédé de détection précoce des instabilités d'un écoulement aérodynamique selon la revendication 1, **caractérisé en ce que** l'analyse des événements détectés consiste :

- à relever (55) la localisation spatio-temporelle des événements détectés à partir des signaux normalisés délivrés par au moins deux capteurs équirépartis sur la circonférence du compresseur,
- à rechercher (56), dans un espace de représentation temps/azimut $(t,\theta)$, des directions de propagation des événements correspondant à des vitesses de propagation comprises entre une valeur zéro et une valeur égale à la vitesse de rotation du rotor du compresseur,
- à affecter (57), pour chaque direction de propagation trouvée, et à chaque événement détecté, un niveau de vraisemblance relatif à la présence d'une propagation spatiale de l'événement détecté dans la direction trouvée,
- à comparer (58) chaque niveau de vraisemblance à une deuxième valeur de seuil prédéterminée pour obtenir au moins une indication sur l'imminence d'une instabilité.

5. Procédé de détection précoce des instabilités d'un écoulement aérodynamique selon la revendication 3, **caractérisé en ce que** l'analyse des événements détectés consiste en outre :

- à relever (55) la localisation spatio-temporelle des événements détectés à partir des signaux normalisés délivrés par au moins deux capteurs équirépartis sur la circonférence du compresseur,
- à rechercher (56), dans un espace de représentation temps/azimut $(t,\theta)$, des directions de propagation des événements correspondant à des vitesses de propagation comprises entre une valeur zéro et une valeur égale à la vitesse de rotation du rotor du compresseur,
- à affecter (57) pour chaque direction de propagation trouvée, et à chaque événement détecté, un niveau de vraisemblance relatif à la présence d'une propagation spatiale de l'événement détecté dans la direction trouvée,
- à comparer (58) chaque niveau de vraisemblance à une deuxième valeur de seuil prédéterminée pour obtenir au moins une deuxième indication sur l'imminence d'une instabilité.

6. Procédé de détection précoce des instabilités d'un écoulement aérodynamique selon l'une quelconque des revendications 4 ou 5, **caractérisé en ce que** le niveau de vraisemblance $J0(t,\theta,v)$ pour un événement E0 détecté au temps t, à la position angulaire $\theta$, se propageant à la vitesse angulaire v, est une fonction du nombre des événements détectés antérieurement à l'événement E0 considéré, dans la direction de propagation correspondant à la vitesse v.

7. Procédé de détection précoce des instabilités d'un écoulement aérodynamique selon l'une quelconque des revendications 4 ou 5, **caractérisé en ce que** le niveau de vraisemblance $J0(t,\theta,v)$ pour un événement E0 détecté au temps t, à la position $\theta$, se propageant à la vitesse angulaire v, est une fonction des niveaux de vraisemblance $Jk(t,\theta,v)$ antérieurs (où k est un nombre entier positif) calculés pour les événements détectés antérieurement à l'événement E0, et se propageant à la vitesse angulaire v.

**Claims**

1. Method for the early detection of the instabilities of an aerodynamic flow in a turbomachine compressor comprising a rotor revolving at a predetermined speed of rotation and rows of stationary blades and of moving blades, **characterized in that** it consists:

- in acquiring (20) the signals delivered by at least one sensor of angular position $\theta$ disposed on the circumference of the compressor between the rows of stationary and moving blades, the acquisition being performed over a predetermined duration,
- in normalizing (30) the signals acquired,
- in detecting (40), on the basis of the normalized signals, events for which the normalized signals exhibit a property consisting of an absence of crossing through a zero value for a duration Tz at least greater than a duration of crossing Ta of two successive moving blades in front of the sensor,
- in analysing (50) the set of events detected,
- in taking a decision (60) as to the imminence of an instability of the aerodynamic flow in the compressor as a function of the result of the analysis of the events.

2. Method for the early detection of the instabilities of an aerodynamic flow according to Claim 1, **characterized in that** the result of the detection of events at the instant t, by a sensor of position θ, is represented by a function E(t, θ) which takes a 1 or 0 logic value depending on whether the property of absence of zero crossing for the duration Tz is or is not satisfied.

3. Method for the early detection of the instabilities of an aerodynamic flow according to Claim 1, **characterized in that** the analysis of the events consists:

- in enumerating (51) the events detected by the sensors for a predetermined duration greater than the duration of crossing Ta of two successive blades in front of the sensor to obtain (52) a value of rate of detection of events,
- in comparing (53) the value of rate of detection obtained with a first predetermined threshold value to obtain at least one first indication as to the imminence of an instability.

4. Method for the early detection of the instabilities of an aerodynamic flow according to Claim 1, **characterized in that** the analysis of the events detected consists:

- in logging (55) the spatio-temporal location of the events detected on the basis of the normalized signals delivered by at least two sensors equidistributed over the circumference of the compressor,
- in searching (56), in a time/azimuth representation space (t,θ), for the directions of propagation of the events corresponding to propagation speeds lying between a zero value and a value equal to the speed of rotation of the rotor of the compressor,
- in assigning (57), for each direction of propagation found, and to each event detected, a likelihood level relating to the presence of a spatial propagation of the event detected in the direction found,
- in comparing (58) each likelihood level with a second predetermined threshold value to obtain at least one indication as to the imminence of an instability.

5. Method for the early detection of the instabilities of an aerodynamic flow according to Claim 3, **characterized in that** the analysis of the events detected consists furthermore:

- in logging (55) the spatio-temporal location of the events detected on the basis of the normalized signals delivered by at least two sensors equidistributed over the circumference of the compressor,
- in searching (56), in a time/azimuth representation space (t,θ), for the directions of propagation of the events corresponding to propagation speeds lying between a zero value and a value equal to the speed of rotation of the rotor of the compressor,
- in assigning (57) for each direction of propagation found, and to each event detected, a likelihood level relating to the presence of a spatial propagation of the event detected in the direction found,
- in comparing (58) each likelihood level with a second predetermined threshold value to obtain at least one second indication as to the imminence of an instability.

6. Method for the early detection of the instabilities of an aerodynamic flow according to any one of Claims 4 or 5, **characterized in that** the likelihood level $J0(t,\theta,v)$ for an event E0 detected at the time t, at the angular position θ, propagating at the angular speed v, is a function of the number of events detected previously to the event E0 considered, in the direction of propagation corresponding to the speed v.

7. Method for the early detection of the instabilities of an aerodynamic flow according to any one of Claims 4 or 5, **characterized in that** the likelihood level $J0(t,\theta,v)$ for an event E0 detected at the time t, at the position θ, propagating at the angular speed v, is a function of the previous likelihood levels $Jk(t,\theta,v)$ (where k is a positive integer) calculated for the events detected previously to the event E0, and propagating at the angular speed v.

**Patentansprüche**

1. Verfahren zur Früherkennung von Unbeständigkeiten einer aerodynamischen Strömung in einem Verdichter eines Turbotriebwerks, welches einen mit einer vorbestimmten Drehzahl drehenden Rotor sowie feststehende Schaufelreihen und bewegbare Schaufelreihen enthält,
**dadurch gekennzeichnet,**
**dass** es darin besteht:

- die Erfassung (20) von Signalen durchzuführen, welche von mindestens einem auf der Umfangslinie des Verdichters zwischen den Reihen feststehender und bewegbarer Schaufeln angeordneten Fühler für die Win-kelposition $\theta$ abgegeben werden, wobei die Erfassung während einer vorbestimmten Zeitdauer erfolgt,
- die erfassten Signale zu normalisieren,
- aus den normalisierten Signalen Vorgänge zu erkennen (40), für die die normalisierten Signale eine Eigenschaft darstellen, die in dem Fehlen eines Durchgangs durch einen Wert Null während einer Zeitdauer Tz, die mindestens größer als eine Durchlaufzeitdauer Ta von zwei aufeinander folgenden bewegbaren Schaufeln vor dem Fühler ist, bestehen,
- die Gesamtheit der erkannten Vorgänge zu analysieren (50),
- in Abhängigkeit von dem Ergebnis der Analyse der Vorgänge eine Entscheidung (60) über die Bedeutsamkeit einer Unbeständigkeit der aerodynamischen Strömung in dem Verdichter zu treffen.

2. Verfahren zur Früherkennung von Unbeständigkeiten einer aerodynamischen Strömung nach Anspruch 1,
**dadurch gekennzeichnet,**
**dass** das Ergebnis der Erkennung von Vorgängen zum Zeitpunkt t durch einen Positionsfühler $\theta$ durch eine Funktion E (t, $\theta$) dargestellt wird, die je nachdem, ob die Eigenschaft des Fehlens eines Durchgangs durch Null während der Zeitdauer Tz verifiziert wird oder nicht, einen logischen Wert 1 oder 0 annimmt.

3. Verfahren zur Früherkennung von Unbeständigkeiten einer aerodynamischen Strömung nach Anspruch 1,
**dadurch gekennzeichnet,**
**dass** die Analyse der Vorgänge darin besteht:

- die Vorgänge, die von den Fühlern während einer vorbestimmten Zeitdauer, die größer ist als die Durchlaufzeitdauer Ta von zwei aufeinander folgenden Schaufeln vor dem Fühler, erkannt werden, auszuzählen (51), um einen Häufigkeitswert von erkannten Vorgängen zu erhalten (52),
- den erhaltenen Erkennungs-Häufigkeitswert mit einem ersten vorbestimmten Schwellenwert zu vergleichen (53), um mindestens eine erste Angabe über das Bevorstehen einer Unbeständigkeit zu erhalten.

4. Verfahren zur Früherkennung von Unbeständigkeiten einer aerodynamischen Strömung nach Anspruch 1,
**dadurch gekennzeichnet,**
**dass** die Analyse der erkannten Vorgänge darin besteht:

- aus den normalisierten Signalen, die von mindestens zwei auf der Umfangslinie des Verdichters gleichmäßig verteilt angeordneten Fühlern abgegeben werden, die räumlich-zeitliche Ortung der erkannten Vorgänge zu bestimmen (55),
- in einem Zeit-/Azimut-Darstellungsraum (t, $\theta$) Ausbreitungsrichtungen der Vorgänge aufzuspüren (56), die den Ausbreitungsgeschwindigkeiten zwischen einem Wert Null und einem Wert, der gleich der Drehgeschwindigkeit des Rotors des Verdichters ist, entsprechen,
- für jede gefundene Ausbreitungsrichtung und jedem erkannten Vorgang einen Grad der Wahrscheinlichkeit bezüglich des Auftretens einer räumlichen Ausbreitung des erkannten Vorgangs in der aufgespürten Richtung zuzuordnen (57),
- jeden Grad der Wahrscheinlichkeit mit einem zweiten vorbestimmten Schwellenwert zu vergleichen (58), um mindestens eine Angabe über das Bevorstehen einer Unbeständigkeit zu erhalten.

5. Verfahren zur Früherkennung von Unbeständigkeiten einer aerodynamischen Strömung nach Anspruch 3,
**dadurch gekennzeichnet,**
**dass** die Analyse der erkannten Vorgänge ferner darin besteht:

- aus den normalisierten Signalen, die von mindestens zwei auf der Umfangslinie des Verdichters gleichmäßig verteilt angeordneten Fühlern abgegeben werden, die räumlich-zeitliche Ortung der erkannten Vorgänge zu bestimmen (55),
- in einem Zeit-/Azimut-Darstellungsraum (t, $\theta$) Ausbreitungsrichtungen der Vorgänge aufzuspüren (56), die den Ausbreitungsgeschwindigkeiten zwischen einem Wert Null und einem Wert, der gleich der Drehgeschwindigkeit des Rotors des Verdichters ist, entsprechen,

- für jede gefundene Ausbreitungsrichtung und jedem erkannten Vorgang einen Grad der Wahrscheinlichkeit bezüglich des Auftretens einer räumlichen Ausbreitung des erkannten Vorgangs in der aufgespürten Richtung zuzuordnen (57),
- jeden Grad der Wahrscheinlichkeit mit einem zweiten vorbestimmten Schwellenwert zu vergleichen (58), um mindestens eine zweite Angabe über das Bevorstehen einer Unbeständigkeit zu erhalten.

6. Verfahren zur Früherkennung von Unbeständigkeiten einer aerodynamischen Strömung nach einem der Ansprüche 4 oder 5,

   **dadurch gekennzeichnet,**

   **dass** der Grad der Wahrscheinlichkeit J0 (t, θ, v) eines zum Zeitpunkt t in der Winkelposition θ erkannten Vorgangs E0, der sich mit der Winkelgeschwindigkeit v ausbreitet, eine Funktion der Anzahl der vor dem betreffenden Vorgang E0 erkannten Vorgänge in der der Geschwindigkeit v entsprechenden Ausbreitungsrichtung ist.

7. Verfahren zur Früherkennung von Unbeständigkeiten einer aerodynamischen Strömung nach einem der Ansprüche 4 oder 5,

   **dadurch gekennzeichnet,**

   **dass** der Grad der Wahrscheinlichkeit J0 (t, θ, v) eines zum Zeitpunkt t in der Position θ erkannten Vorgangs E0, der sich mit der Winkelgeschwindigkeit v ausbreitet, eine Funktion der vorherigen Wahrscheinlichkeitsgrade Jk (t, θ, v) ist (wobei k eine ganze, positive Zahl ist), die für die vor dem betreffenden Vorgang E0 erkannten Vorgänge berechnet wurden, die sich mit der Winkelgeschwindigkeit v ausbreiten.

EP 1 138 952 B1

**Fig : 1**

**11**

Bords d'attaque

Sens de rotation

p

P statique

$T_a$

temps

**Fig : 2**

Fig : 3

Sens de rotation

Bords d 'attaque

**Fig : 4a**

p

$T_a$

$T_z$

temps

**Fig : 4b**

```
┌─────────────────────────────┐
│  Acquisition des signaux    │ ⟋20
└─────────────────────────────┘
              │
              ▼
      ┌──────────────────┐
      │  Normalisation   │ ⟋30
      └──────────────────┘
              │
              ▼
  ┌──────────────────────────────┐
  │  Détection des évènements    │ ⟋40
  └──────────────────────────────┘
              │
  ┌───────────┼────────────────────────────┐
  │           ▼                             │
  │   ┌──────────────────────────────┐      │
  │   │  Dénombrement des évènements │ ⟋51  │
  │   └──────────────────────────────┘      │
  │           │                             │
50 │           ▼                             │
  │   ┌──────────────────────────┐          │
  │   │  Cadence de détection    │ ⟋52      │
  │   └──────────────────────────┘          │
  │           │                             │
  │           ▼                             │
  │ ┌──────────────────────────────────┐    │
  │ │ Comparaison à un premier seuil   │ ⟋53│
  │ └──────────────────────────────────┘    │
  └───────────┼────────────────────────────┘
              ▼
      ┌──────────────┐
      │  Décision    │ ⟋60
      └──────────────┘
```

**Fig : 5**

16

Acquisition des signaux — **20**

↓

Normalisation — **30**

↓

Détection des évènements — **40**

↓

**50**
- Localisation spatio-temporelle des évènements — **55**

  ↓

  Recherche des directions de propagation — **56**

  ↓

  Calcul des niveaux de vraisemblance — **57**

  ↓

  Comparaison à un deuxième seuil — **58**

↓

Décision — **60**

## Fig : 6

**Fig : 7**

Direction $v_1$

Position angulaire $\theta$  ⋅ Direction $v_2$   Direction $v_3$

$\theta_4$

$\theta = \theta_2$

$\theta_1$

t   Temps

● $E(t, \theta) = 1$

| Vraisemblance $J$ d'une propagation très faible à la vitesse $v_1$ ou $v_2$ | Vraisemblance $J$ d'une propagation forte à la vitesse $v$ |
|---|---|
| Décision : **pas d'instabilité** | Décision : **présence d'une instabilité** |

## Fig : 8

**Fig : 9**

**Fig : 10**